# EUROPÄISCHE PATENTSCHRIFT

(11) **EP 4 083 508 B1**
(45) Veröffentlichungstag und Bekanntmachung des Hinweises auf die Patenterteilung: **24.04.2024**
(21) Anmeldenummer: 22168115.8
(22) Anmeldetag: 13.04.2022
(51) Int. Cl.: F23R 3/00, F02C 7/224, F23R 3/28

(54) **BRENNKAMMERBAUGRUPPE FÜR EIN TRIEBWERK MIT MEHREREN WÄRMETAUSCHERKANÄLEN FÜR EINZUDÜSENDEN KRAFTSTOFF**
COMBUSTION CHAMBER ASSEMBLY FOR AN ENGINE WITH A PLURALITY OF HEAT EXCHANGER DUCTS FOR FUEL TO BE INJECTED
ENSEMBLE CHAMBRE DE COMBUSTION POUR UN RÉACTEUR POURVU DE PLUSIEURS CANAUX D'ÉCHANGE THERMIQUE POUR CARBURANT À INJECTER

(30) Priorität: 26.04.2021 DE 102021110614
(43) Veröffentlichungstag der Anmeldung: 02.11.2022
(73) Patentinhaber: Rolls-Royce Deutschland Ltd & Co KG, 15827 Blankenfelde-Mahlow (DE)
(72) Erfinder: CLEMEN, Carsten, 15749 Mittenwalde (DE)

(56) Entgegenhaltungen:
- DE-A1-102009 003 603
- DE-A1-102018 113 824
- US-A- 4 399 652
- US-A1- 2017 218 845
- DATABASE WPI Week 199952 Thomson Scientific, London, GB; AN 1999-605537 XP002807480, & JP H11 264542 A (DENRYOKU CHUO KENKYUSHO) 28. September 1999 (1999-09-28)

## Beschreibung

Die vorgeschlagene Lösung betrifft eine Brennkammerbaugruppe für ein Triebwerk, insbesondere für ein mit Wasserstoff betriebenes Triebwerk.

Bei bisher in der Praxis üblichen, mit zum Beispiel Kerosin als Kraftstoff betriebenen Triebwerken werden an einer Brennkammer der Kraftstoff und Luft über mindestens eine Kraftstoffdüse in einen Brennraum der Brennkammer eingedüst, um ein entzündliches Kraftstoff-Luft-Gemisch bereitzustellen. Die Kraftstoffdüse umfasst zur Bereitstellung des Kraftstoff-Luft-Gemisches einen Düsenkopf mit Ausströmöffnungen an einer Stirnseite des Düsenkopfes. Diese Stirnseite ist dabei im bestimmungsgemäß eingebauten Zustand der Kraftstoffdüse einem Brennraum der Brennkammer zugewandt. Typischerweise wird der Kraftstoff hierbei über eine an der Stirnseite kreisringförmig erscheinende erste Ausströmöffnung eingedüst. Die erste Ausströmöffnung für den Kraftstoff ist somit nach Art eines Ringspalts ausgestaltet. Auch eine, bezogen auf einer Hauptströmungsrichtung des einzudüsenden Kraftstoffes, radial innenliegende zweite Ausströmöffnung für einzudüsende Luft weist an der Stirnseite typischerweise einen kreisringförmigen Verlauf auf. Gleiches gilt für wenigstens eine zusätzliche, dritte Ausströmöffnung an der Stirnseite des Düsenkopfes oder an einer den Düsenkopf aufnehmenden Durchgangsöffnung in einem Hitzeschild der Brennkammer. Die mehreren unterschiedlichen Ausströmöffnung für Kraftstoff und Luft sind somit typischerweise jeweils im Querschnitt kreisringförmig nach Art von Ringspalten ausgebildet. Damit geht dann auch regelmäßig eine kreiszylindrische Ausbildung des Düsenkopfes der Kraftstoffdüse einher.

Während sich die vorstehend beschriebene Gestaltung eines Düsenkopfes einer Kraftstoffdüse für einzudüsenden flüssigen Kraftstoff, zum Beispiel Kerosin, bewährt hat, besteht mit Blick auf mit einem gasförmigen Kraftstoff, z.B. Wasserstoff, betriebene Triebwerke und damit gasförmig einzudüsenden Kraftstoff weiterer Verbesserungsbedarf. Hierbei ist insbesondere zu berücksichtigen, dass gasförmiger Kraftstoff, wie zum Beispiel Wasserstoff, bei einem Eindüsen über eine Kraftstoffdüse eines Kraftstoffeinspritzsystems unter Umständen noch eine vergleichsweise niedrige Temperatur aufweist. So ist bei Wasserstoff eine Vorwärmung des Wasserstoffs entscheidend, bevor der Wasserstoff eingedüst wird. Eine entsprechende Vorwärmung kann aber auch bei anderen Kraftstoffen von Vorteil sein.

Beispielsweise schlägt die WO 97/14875 A1 vor, einen einzudüsenden Kraftstoff zunächst über Leitungen an einer Brennkammerwand entlangzuführen, bevor der Kraftstoff an einen Brennkammerkopf der Brennkammer geführt und hier über eine Kraftstoffdüse in einen Brennraum der Brennkammer eingedüst wird.

Bei der US 2020/0217509 A1 ist wiederum vorgeschlagen, an einem Düsenstamm einer Kraftstoffdüse Wärmeübertragungskanäle für Luft vorzusehen, um in Richtung eines Düsenkopfes strömenden Kraftstoff über aus einem Verdichter kommende Luft vorzuwärmen. Die zur Vorwärmung genutzte Luft wird dabei nach dem Gegenstromprinzip in dem Düsenstamm zur Wärmeübertragung genutzt und dann wieder aus dem Düsenstamm in einen die Brennkammer umgebenen Strömungsraum geführt, also nicht unmittelbar in den Brennraum eingedüst. Vielmehr ist an dem Düsenstamm stromauf des Düsenkopfes eine Aufteilung einer Luftströmung vorgesehen, sodass ein Teil der einströmenden Luft zur Vorwärmung des Kraftstoffs genutzt wird und ein anderer Teil zum Düsenkopf geführt wird, um in den Brennraum eingedüst zu werden. Weitere gattungsgemäße Brennkammern sind in DE 10 2018 113 824 A1 und DE 10 2009 003 603 A1 offenbart.

Die aus dem Stand der Technik bekannten Lösungen zum Vorwärmen einzudüsenden Kraftstoffs nutzen stets nur vergleichsweise kurze und/oder wenige Strömungspfade, um den Kraftstoff zu erwärmen und/oder nutzen eine abgekühlte Luftströmung allenfalls indirekt zur Bereitstellung eines Kraftstoff-Luft-Gemisches in dem Brennraum. Gerade bei Wasserstoff als einzudüsendem Kraftstoff, der bei einer extrem niedrigen Temperatur in einem Wasserstoffspeicher flüssig vorgehalten wird, sind die aus dem Stand der Technik bekannten Lösungen verbesserungswürdig.

Hier schafft eine Brennkammerbaugruppe des Anspruchs 1 Abhilfe.

Gemäß einem ersten Aspekt der vorgeschlagenen Lösung ist eine Brennkammerbaugruppe für ein Triebwerk vorgesehen, die unter anderem eine Brennkammer umfasst, die einen von einer Brennkammerwand berandeten und sich entlang einer Hauptströmungsrichtung von einem Brennkammerkopf zu einem Brennkammerauslass erstreckenden Brennraum definiert. Ein Kraftstoffeinspritzsystem umfasst mindestens eine Kraftstoffzuleitung für den in den Brennraum einzudüsenden Kraftstoff. An dem Brennkammerkopf ist ein Kopfteil für die Bereitstellung eines Kraftstoff-Luft-Gemischs vorgesehen, das an einer dem Brennraum zugewandten Stirnseite eine Mehrzahl von ersten Ausströmöffnungen für Kraftstoff und eine Mehrzahl von zweiten Ausströmöffnungen für Luft aufweist. Es sind ferner Wärmetauscherkanäle für eine Wärmeübertragung zwischen in dem Kopfteil zu den ersten Ausströmöffnungen strömenden Kraftstoff und in dem Kopfteil zu den zweiten Ausströmöffnungen strömenden Luft integriert.

Gemäß diesem Aspekt der vorgeschlagenen Lösung ist somit eine Wärmeübertragung in einem Kopfteil im Bereich des Brennkammerkopfes zwischen dem in den Brennraum einzudüsenden Kraftstoff und der in den Brennraum einzudüsenden Luft gezielt zugelassen und forciert, wobei über das Kopfteil Kraftstoff und Luft dann auch über eine Mehrzahl von ersten und zweiten Ausströmöffnungen in den Brennraum eingebracht wird. Auch bei diesem Aspekt lässt sich - insbesondere bei Wasserstoff als genutztem Kraftstoff - eine effizientere Erwärmung des Kraftstoffs vor dem Eindüsen in den Brennraum erreichen. Darüber hinaus können entsprechende Wärmeübertragungsvorgänge unmittelbar an einem Kopfteil der Brennkammerbaugruppe erfolgen, die dann auch das Eindüsen des Kraftstoffs und der Luft und damit die Bereitstellung eines gewünschten Kraftstoff-Luft-Gemischs ermöglicht. Die dafür an dem Kopfteil vorgesehene Mehrzahl von sowohl ersten als auch zweiten Ausströmöffnungen kann dabei gerade bei einem gasförmig einzuführenden Kraftstoff, wie zum Beispiel Wasserstoff, auch eine effizientere Gemischbildung ermöglichen.

Grundsätzlich können in dem Kopfteil eine Mehrzahl von Wärmetauscherkanälen für Kraftstoff und eine Mehrzahl von Wärmetauscherkanälen für Luft integriert sein. Über mehrere und insbesondere eine Vielzahl von Wärmetauscherkanälen kann die Wärmeübertragung zwischen dem einzudüsenden Kraftstoff und der einzudüsenden Luft gesteigert werden. Hierbei können die Mehrzahl von Wärmetauscherkanälen für Kraftstoff und die Mehrzahl von Wärmetauscherkanälen für Luft in dem Kopfteil insbesondere gleichmäßig verteilt sein. Dabei ist es aber nicht zwingend, dass die gleichmäßig verteilten Wärmetauscherkanäle in entsprechende erste oder zweite ebenfalls gleichmäßig an der Stirnseite verteilt angeordnete erste und zweiten Ausströmöffnungen münden. Dies ist in einer Ausführungsvariante aber denkbar. Alternativ kann eine ungleichmäßige Verteilung der ersten und zweite Ausströmöffnungen an der Stirnseite des Kopfteils vorgesehen sein.

In einer Ausführungsvariante ist somit ein Teil der ersten und zweiten Ausströmöffnungen an der Stirnseite in einem Muster angeordnet, bei dem benachbarte (erste und zweite) Ausströmöffnungen in einer Vorderansicht auf die Stirnseite durch einen länglichen Steg voneinander separiert sind. Bei entsprechend angeordneten Ausströmöffnungen sind somit die benachbarten Ausströmöffnungen lediglich durch einen schmalen Steg voneinander separiert. Die Stegbreite eines solchen Stegs entspricht dabei beispielsweise lediglich einem Bruchteil einer maximalen Breite der angrenzenden ersten und zweiten Ausströmöffnungen. Derart kann die an der Stirnseite zur Verfügung stehende Fläche effizient für die Einbringung des Kraftstoff-Luft-Gemisches genutzt werden. Hierbei ist insbesondere die Anordnung der ersten und zweiten Ausströmöffnungen nach Art eines Wabenmusters denkbar. Insbesondere durch die Anordnung der Ausströmöffnungen in einem Muster mit lediglich über einen länglichen Steg voneinander getrennten benachbarten Ausströmöffnungen lässt sich eine Fläche an der Stirnseite realisieren, die zu wenigstens 65%, insbesondere wenigstens 75% oder wenigstens 85% mit (ersten und zweiten) Ausströmöffnungen gefüllt ist. Mit anderen Worten ist dann ein entsprechender prozentualer Anteil und damit ein Großteil der an der Stirnseite des Kopfteils zur Verfügung stehenden Fläche durch erste und zweite Ausströmöffnungen eingenommen.

Grundsätzlich können die ersten und zweiten Ausströmöffnungen beispielsweise einen kreisförmigen oder mehreckigen, insbesondere viereckigen Querschnitt aufweisen. Als vorteilhaft eingestufte Ausführungsvarianten sehen beispielsweise einen quadratischen, rautenförmigen oder hexagonalförmigen Querschnitt der ersten und/oder zweiten Ausströmöffnungen vor.

In einer Ausführungsvariante ist an einer von dem Brennraum abgewandten Außenseite des Kopfteils eine Mehrzahl von Einströmöffnung für zu den zweiten Ausströmöffnungen zu leitende Luft vorgesehen. Über die an der Außenseite des Kopfteils vorgesehenen Einströmöffnungen gelangt dann beispielsweise aus einem Verdichter des Triebwerks stammende Luft in entsprechende Wärmetauscherkanäle innerhalb des Kopfteils, die in die zweiten Ausströmöffnungen an der dem Brennraum zugewandten Stirnseite des Kopfteils münden. Die Außenseite des Kopfteils kann hierbei gewölbt, insbesondere konvex gewölbt ausgebildet sein. Beispielsweise ist die Außenseite des Kopfteils als Kopfplatte mit der Mehrzahl von Einströmöffnung ausgebildet.

Alternativ oder ergänzend kann das Kopfteil mit den hieran integrierten Wärmetauscherkanälen ein additiv gefertigtes Bauteil sein. Ein entsprechendes Bauteil ist somit beispielsweise im Wege eines 3D-Druckverfahrens hergestellt, wodurch eine komplexe Gestaltung einer Mehrzahl von Wärmetauscherkanälen in dem Kopfteil ohne weiteres möglich ist.

In einer Ausführungsvariante ist die Kraftstoffzuleitung des Kraftstoffeinspritzsystems mit einem Sammler verbunden, der wiederum mit einer Mehrzahl von für den Kraftstoff vorgesehenen Wärmetauscherkanälen des Kopfteils verbunden ist. Der Sammler dient somit dazu, aus der Kraftstoffzuleitung kommenden Kraftstoff auf die Mehrzahl von für den Kraftstoff vorgesehenen Wärmetauscherkanälen in dem Kopfteil zu verteilen. Insbesondere können der Sammler und das Kopfteil hierbei einstückig ausgebildet sein. Sammler und Kopfteil sind somit in einem Bauteil integriert, zum Beispiel in einem additiv gefertigten Bauteil. Eine Verbindung des Sammlers mit der Kraftstoffzuleitung und hierbei dann zum Beispiel einem die Kraftstoffzuleitung aufweisenden Düsenstamms des Kraftstoffeinspritzsystems kann stoffschlüssig sein. Insbesondere kann eine Verbindung des Sammlers mit der Kraftstoffzuleitung respektive einem die Kraftstoffzuleitung aufweisenden Düsenstamm über mindestens eine Schweiß- und/oder Lötverbindung vorgesehen sein.

Das Kopfteil, zu dem über den Sammler Kraftstoff zu den Wärmetauscherkanälen des Kopfteils geführt wird, kann somit einen Düsenkopf des Kraftstoffeinspritzsystems bilden.

Ein zweiter Aspekt sieht ferner vor, dass die Brennkammerwand mindestens einen Wärmetauscherkanal integriert, über den Kraftstoff in einem mit der Kraftstoffleitung verbundenen ersten Kanalabschnitt des Wärmetauscherkanals von dem Brennkammerkopf in Richtung des Brennkammerauslasses und nach dem Durchströmen eines Umlenkbereichs in einem zweiten Kanalabschnitt des Wärmetauscherkanals zurück in Richtung des Brennkammerkopfes und des Düsenkopfs geleitet wird.

Anstelle einer Verbindung der Kraftstoffzuleitung mit einem Sammler, der mit den kopfteilseitigen Wärmetauscherkanälen verbunden ist, kann, auch vorgesehen sein, dass ein Kopfteil gemäß dem ersten Aspekt mit einer kraftstoffführenden Brennkammerwand gemäß dem zweiten Aspekt kombiniert wird. Hierbei kann in einer Ausführungsvariante beispielsweise vorgesehen sein, dass über die brennkammerkopfseitige Kraftstoff(sammel)leitung, mit der mehrere Wärmetauscherkanäle der Brennkammerwand verbunden sind, Kraftstoff zu den Wärmetauscherkanälen des den Düsenkopf des Kraftstoffeinspritzsystems bildenden Kopfteils geführt wird. Über die brennkammerkopfseitige Kraftstoff(sammel)leitung, zu der bereits erwärmter/vorgewärmter Kraftstoff aus der Brennkammerwand geführt wird, gelangt somit Kraftstoff zu dem Kopfteil und dessen Wärmetauscherkanälen für eine dann zusätzliche Wärmeübertragung vor einem Eindüsen des Kraftstoffs in den Brennraum.

Bei der vorgeschlagenen Lösung wird folglich der zurückgeleitete, erwärmte Kraftstoff zum Düsenkopf geleitet und über mindestens eine an dem Düsenkopf vorgesehene (erste) Ausströmöffnung, zusammen mit Luft, in den Brennraum eingedüst. Durch die Führung des Kraftstoffs von dem Brennkammerkopf in Richtung des Brennkammerauslasses und wieder zurück innerhalb der Brennkammerwand kann effektiv die in dem Brennraum herrschende hohe Temperatur zur Vorwärmung des Kraftstoffs über einen vergleichsweise langen Strömungspfad genutzt und eine effiziente Wärmeübertragung erreicht werden. Die Brennkammerwand und gegebenenfalls auch der Brennkammerkopf können somit doppelwandig ausgebildet sein, um den Kraftstoff vor einem Eindüsen am Düsenkopf zu erwärmen.

Gleichzeitig ist der Wärmetauscherkanal zur Kühlung der Brennkammerwand über den hierin geführten Kraftstoff vorgesehen, bevor der Kraftstoff an den Düsenkopf gelangt. Insbesondere bei einer Nutzung von Wasserstoff als Kraftstoff für ein Triebwerk und die damit verbundenen vergleichsweise niedrigen Temperaturen des Wasserstoffs ist auf diese Weise eine effiziente Kühlung der Brennkammerwand möglich. Zur Kühlung der Brennkammerwand ist somit eine deutlich kleinere Menge an Kühlluftströmung an einer äußeren Mantelfläche der Brennkammerwand entlangzuführen, um die Brennkammerwand ausreichend zu kühlen. Gegebenenfalls kann eine entsprechende Kühlerluftströmung sogar gänzlich entfallen. In jedem Fall steht deutlich mehr aus einem Verdichter in Richtung der Brennkammer strömende Luft für die Verbrennung in dem Brennraum zur Verfügung. Dies kann wiederum zur Emissionsreduzierung mit Blick auf NOx-Emissionen führen. Zudem verlängert eine effiziente Brennkammerwandkühlung die Lebensdauer der Brennkammer.

Bei der vorgeschlagenen Lösung strömt Kraftstoff aus der Kraftstoffzuleitung zunächst in den ersten Kanalabschnitt des Wärmetauscherkanals. Der zurückgeführte, vorgewärmte Kraftstoff wird dann wiederum über den zweiten Kanalabschnitt des Wärmetauscherkanals in Richtung des Brennkammerkopfes geleitet. Der zweite Kanalabschnitt kann hierbei mit einer Kraftstoffleitung verbunden sein, über die der vorgewärmte Kraftstoff dann an den Düsenkopf geleitet wird.

In einer Ausführungsvariante weist die Brennkammerwand eine dem Brennraum zugewandte innere Mantelfläche und eine gegenüberliegende äußeren Mantelfläche auf. Der erste Kanalabschnitt grenzt dann beispielsweise an die äußere Mantelfläche an, während der zweite Kanalabschnitt an die innere Mantelfläche angrenzt. Die kältere Kraftstoffströmung in dem ersten Kanalabschnitt liegt somit bezogen auf den Brennraum weiter außen vor, während die rückgeführte Kraftstoffströmung näher am Brennraum liegt.

Zwischen den ersten und zweiten Kanalabschnitten kann innerhalb der Brennkammerwand eine Trennwand vorgesehen sein. Die erste und zweiten Kanalabschnitte sind somit innerhalb der Brennkammerwand über eine solche Trennwand voneinander separiert. Über die Trennwand hinweg kann dabei selbstverständlich auch eine Wärmeübertragung stattfinden.

Grundsätzlich kann sich der erste Kanalabschnitt in der Brennkammerwand über einen Großteil einer Gesamtlänge des Brennraums erstrecken. Insbesondere kann sich der erste Kanalabschnitt in der Brennkammerwand im Wesentlichen über die Gesamtlänge des Brennraums und damit insbesondere bis zu dem Brennkammerauslass erstrecken. Derart steht ein substantieller Teil der Brennkammerwand entlang der Hauptströmungsrichtung zweifach (für Hinführung und Rückführung des Kraftstoffs) zur Verfügung, um den Kraftstoff vor dem Eindüsen in den Brennraum zu erwärmen und gleichzeitig eine Kühlung für die Brennkammerwand zur Verfügung zu stellen. Dementsprechend ist dann auch der zweite für die Rückführung des Kraftstoffs zum Brennkammerkopf und dem Düsenkopf vorgesehene Kanalabschnitt mit einer entsprechenden Länge ausgebildet.

In einer Ausführungsvariante weist die Brennkammerwand, bezogen auf die Hauptströmungsrichtung (und damit zum Beispiel auch bezogen auf eine im Wesentlichen parallel zu der Hauptströmungsrichtung verlaufende Mittelachse der Brennkammer), einen radial außen liegenden Wandabschnitt und einen radial innen liegenden Wandabschnitt auf. Die Brennkammerwand integriert dann jeweils mindestens einen Wärmetauscherkanal sowohl in dem radial außen liegenden Wandabschnitt als auch in dem radial innen liegenden Wandabschnitt. In beiden Wandabschnitten sind somit jeweils ein erster und ein zweiter Kanalabschnitt für die Hin- und Rückführung des Kraftstoffes vorgesehen. Dies schließt insbesondere ein, dass jeder Wärmetauscherkanal einen eigenen Umlenkbereich an einem abseits des Brennkammerkopfes liegenden Ende des jeweiligen Wärmetauscherkanals für die Verbindung seines ersten Kanalabschnitts mit seinem zweiten Kanalabschnitt umfasst. Eingeschlossen ist aber auch ferner insbesondere eine alternative Ausführungsvariante, bei der ein gemeinsamer Umlenkbereich vorgesehen ist, über den dann beispielsweise jeweils ein erster Kanalabschnitt eines (ersten) Wärmetauscherkanals mit einem zweiten Kanalabschnitt eines anderen (zweiten) Wärmetauscherkanals verbunden ist. Derart wird Kraftstoff zunächst in einem radial inneren oder radial außen liegenden Wandabschnitt in Richtung des Brennkammerauslasses geleitet, bevor der Kraftstoff anschließend, nach Durchströmen des Umlenkbereichs, in einem anderen, radial außen respektive innen liegenden Wandabschnitt zurück in Richtung des Brennkammerkopfes geleitet wird. In dem zuletzt genannten Fall gibt es somit, bezogen auf die Hauptströmungsrichtung, in dem Umlenkbereich wenigstens eine radial oder umfangsseitig verlaufende Querverbindung zwischen den Wärmetauscherkanälen der unterschiedlichen Wandabschnitte der Brennkammerwand.

In einer Alternative ist an dem Brennkammerkopf ein mit der Kraftstoffzuleitung verbundener Verteiler vorgesehen, über den eine aus der Kraftstoffzuleitung kommende Kraftstoffströmung auf mindestens zwei Wärmetauscherkanäle der Brennkammerwand aufteilbar ist. Der mit der Kraftstoffzuleitung verbundene Verteiler kann somit vorgesehen und eingerichtet sein, eine aus der Kraftstoffzuleitung kommende Kraftstoffströmung auf wenigstens zwei unterschiedliche Wärmetauscherkanäle respektive deren jeweilige erste Kanalabschnitte aufzuteilen. Ausgehend von dem Verteiler fließt somit beispielsweise ein Teil der aus der Kraftstoffzuleitung kommenden Kraftstoffströmung in einen radial außen liegenden Wandabschnitt, während ein anderer Teil der Kraftstoffströmung in einen radial innen liegenden Wandabschnitt strömt.

Grundsätzlich kann der Verteiler für eine Gleichverteilung der Kraftstoffströmung auf die mindestens zwei Wärmetauscherkanäle eingerichtet und vorgesehen sein. Aus der Kraftstoffzuleitung kommender Kraftstoff wird somit über den Verteiler zu gleichen Teilen auf die mindestens zwei Wärmetauscherkanäle aufgeteilt.

In einer alternativen Ausführungsvariante ist der Verteiler für eine Verteilung der Kraftstoffströmung zu unterschiedlichen Teilen auf die mindestens zwei Wärmetauscherkanäle eingerichtet und vorgesehen. Dies schließt beispielsweise ein, dass 40% oder 1/3 einer aus der Kraftstoffzuleitung kommenden Kraftstoffströmung in einen ersten Wärmetauscherkanal geleitet werden, während 60% oder 2/3 der Kraftstoffströmung in einen zweiten Wärmetauscherkanal geleitet werden. Eine derartige unterschiedliche Aufteilung der Kraftstoffströmung kann insbesondere einem unterschiedlichen Kühlungsbedarf der unterschiedlichen Wandabschnitte der Brennkammerwand Rechnung tragen. Die Zuteilung auf die unterschiedlichen Wärmetauscherkanäle kann dabei konstruktiv fest eingestellt sein. Gegebenenfalls kann aber auch eine elektronisch steuerbare, insbesondere geregelte Verteilung der Kraftstoffströme vorgesehen sein.

Für den in Richtung des Brennkammerkopfes zurückgeführten, vorgewärmten Kraftstoff kann an dem Brennkammerkopf eine Kraftstoffleitung vorgesehen sein. Diese Kraftstoffleitung dient dann der Zuführung des zurückgeführten Kraftstoffs an den Düsenkopf. Bei mehreren (mindestens zwei) Wärmetauscherkanälen in unterschiedlichen Wandabschnitten der Brennkammerwand kann jeder Wärmetauscherkanal einen zweiten Kanalabschnitt aufweisen, der mit der (dann gemeinsamen) Kraftstoffleitung verbunden ist. Die der Zuführung des vorgewärmten Kraftstoffs an den Düsenkopf dienende Kraftstoffleitung kann somit eine Kraftstoffsammelleitung sein, die mit zweiten Kanalabschnitten der unterschiedlichen Wärmetauscherkanäle verbunden ist.

Grundsätzlich kann, wie bereits vorab erläutert, vorgesehen sein, dass die mindestens zwei Wärmetauscherkanäle abseits und damit stromab des Brennkammerkopfes miteinander verbunden sind. Eine derartige Verbindung kann dann beispielsweise über den Umlenkbereich realisiert sein.

In einer Ausführungsvariante wird über einen (gemeinsamen) Umlenkbereich jeweils ein erster Kanalabschnitt eines Wärmetauscherkanals mit einem zweiten Kanalabschnitt eines anderen Wärmetauscherkanals verbunden, sodass Kraftstoff zunächst in einem (im Querschnitt) radial innen oder radial ausliegenden Wandabschnitt der Brennkammerwand in Richtung des Brennkammerauslasses geleitet wird und anschließend in dem anderen, radial außen oder radial innen liegenden Wandabschnitt zurück in Richtung des Brennkammerkopfes geleitet wird.

In einer Ausführungsvariante ist der Umlenkbereich, insbesondere ein gemeinsamer Umlenkbereich für mehrere Wärmetauscherkanäle, zur Kühlung wenigstens einer Komponente einer der Brennkammer nachgeordneten Turbine vorgesehen. So kann beispielsweise der Umlenkbereich zur Kühlung eines Turbinenleitrades, insbesondere eines sogenannte Turbinenvorleitrades einer der Brennkammer nachgeordneten Turbine vorgesehen sein. Der dann bis zu dem Umlenkbereich an dem Brennkammerauslass geführte Kraftstoff dient somit zur zusätzlichen Kühlung eines entsprechenden Turbinen(vor)leitrades.

Grundsätzlich kann eine Brennkammerbaugruppe des zweiten Aspekts auch mit einer Brennkammerbaugruppe des ersten Aspekts kombiniert werden. So kann dann beispielsweise über mindestens einen zweiten Kanalabschnitt eines brennkammerwandseitigen Wärmetauscherkanals zurückgeführter Kraftstoff in ein Kopfteil mit einer Mehrzahl von weiteren Wärmetauscherkanälen geleitet werden, um in dem Kopfteil eine ergänzende Erwärmung des Kraftstoffs vor dem Eindüsen in den Brennraum zu erreichen. Der zweite Aspekt der vorgeschlagenen Lösung ist aber selbstverständlich auf eine derartige Ausführung nicht beschränkt. So kann eine vorgeschlagene Kraftstofferwärmung innerhalb einer Brennkammerwand respektive einer Kraftstoffkühlung einer Brennkammerwand auch unabhängig von einem Kopfteil mit mehreren Wärmetauscherkanälen vorteilhaft sein.

Grundsätzlich eignet sich die vorgeschlagene Lösung für das Eindüsen eines flüssigen Kraftstoffs. Eine Ausführungsvariante sieht jedoch vor, dass die Brennkammerbaugruppe für das Eindüsen eines gasförmigen Kraftstoffs, insbesondere für das Eindüsen von Wasserstoff in den Brennraum der Brennkammer vorgesehen ist.

Darüber hinaus umfasst die vorgeschlagene Lösung ein Triebwerk, insbesondere ein wasserstoffbetriebenes Triebwerk mit einer Ausführungsvariante einer vorgeschlagenen Brennkammerbaugruppe nach dem ersten und/oder zweiten Aspekt.

Die beigefügten Figuren veranschaulichen exemplarisch mögliche Ausführungsvarianten der vorgeschlagenen Lösung.

Hierbei zeigen:
- Figur 1: ausschnittsweise und in geschnittener Ansicht eine erste Ausführungsvariante einer vorgeschlagenen Brennkammerbaugruppe, bei der in einer doppelwandigen Brennkammerwand einer Brennkammer vorzuwärmender Kraftstoff in der zu kühlenden Brennkammerwand in Richtung eines Brennkammerauslasses und wieder zurück zu einem Brennkammerkopf geführt wird;
- Figur 2: in mit der Figur 1 übereinstimmender Ansicht die Brennkammerbaugruppe unter Darstellung zusätzlicher Zumischluftlöcher und Kühlluftbohrungen an der Brennkammerwand sowie wenigstens einer Brennkammerschindel an einer inneren Mantelfläche der Brennkammerwand;
- Figur 3: in mit den Figuren 1 und 2 übereinstimmender Ansicht eine Weiterbildung der Brennkammerbaugruppe, bei der zwei Wärmetauscherkanäle aus unterschiedlichen Wandabschnitten der Brennkammerwand über einen gemeinsamen Umlenkbereich miteinander verbunden sind, der zusätzlich der Kühlung eines Turbinenvorleitrades dient;
- Figuren 4A-4D: ausschnittsweise und exemplarisch unterschiedliche Varianten der Brennkammerwand für eine Brennkammerbaugruppe der Figuren 1, 2 und 3 unter Darstellung unterschiedlicher Leitelemente für die Führung des Kraftstoffs innerhalb der Brennkammerwand;
- Figur 5A: ausschnittsweise und in geschnittener Ansicht eine weitere Ausführungsvariante einer vorgeschlagenen Brennkammerbaugruppe, bei der die Eindüsung eines Kraftstoffs über mehrere Ausströmöffnungen an einer Stirnseite eines am Brennkammerkopf vorgesehenen Kopfteils erfolgt;
- Figur 5B: in mit der Figur 5A übereinstimmender Ansicht das Kopfteil unter Darstellung einer Mehrzahl von Wärmetauscherkanälen für Kraftstoff und Luft, die an dem Kopfteil integriert sind;
- Figuren 6A-6B: Vorder- und Rückansichten entsprechend den Blickrichtungen A und B der Figur 5B;
- Figuren 7A-7C: unterschiedliche Querschnitte für erste und zweite Ausströmöffnungen an einem Kopfteil der Figuren 5A bis 6B;
- Figur 8: in mit der Figur 6A übereinstimmender Ansicht eine weitere Ausführungsvariante, bei der an der Stirnseite des Kopfteils erste und zweite jeweils rautenförmige Ausströmöffnungen unter Einnahme eines Großteils der Fläche der Stirnseite nach Art eines Wabenmusters angeordnet sind;
- Figur 9: in Draufsicht und schematisch ein Flugzeug mit zwei Triebwerken, die jeweils mindestens eine Kraftstoffdüse der vorgeschlagenen Lösung aufweisen;
- Figur 10: schematisch den Aufbau eines der Triebwerke des Flugzeugs der Figur 9, die jeweils mit Wasserstoff betrieben werden;
- Figur 11: eine aus dem Stand der Technik bekannte Brennkammerbaugruppe, bei der eine konventionelle Kraftstoffdüse für das Eindüsen von Kerosin in eine Brennkammer vorgesehen ist;
- Figur 12: mit Blick auf eine Stirnseite eines Düsenkopfes der Kraftstoffdüse der Figuren 111 die eingebaute Kraftstoffdüse mit dem in einer Durchgangsöffnung eines Hitzeschildes aufgenommenen Düsenkopf.

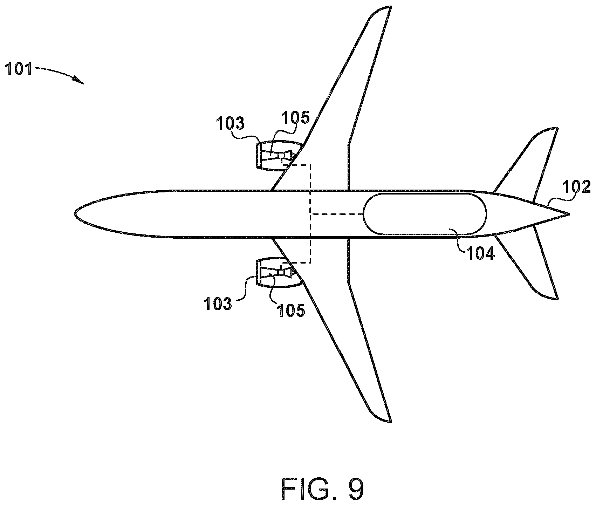

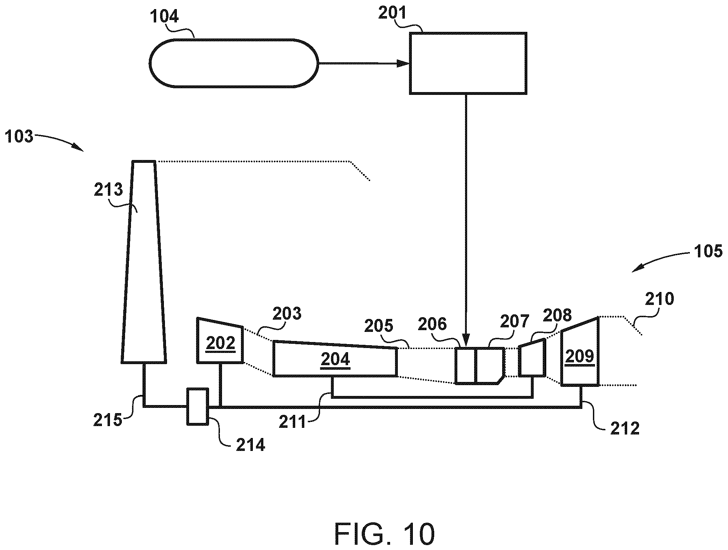

Die Figur 9 zeigt in Draufsicht ein Flugzeug 101, beispielsweise ein Passagierflugzeug. Das Flugzeug 101 weist einen Rumpf 102 mit zwei Tragflächen auf, an denen jeweils ein Triebwerk 103, beispielsweise ein Turbofan-Triebwerk, vorgesehen ist. Im Rumpf 102 des Flugzeugs 101 ist ein Wasserstoffspeichertank 104 untergebracht. In diesem Wasserstoffspeichertank 104 wird Wasserstoff als Kraftstoff für die Triebwerke 103 vorgehalten, beispielsweise in flüssiger Form. Der Wasserstoff aus dem Wasserstoffspeichertank 104 wird über ein Kraftstoffzuführsystem 201 (vgl. Figur 10) den Triebwerken 103 zur Verfügung gestellt und hier zur Verbrennung in einem jeweiligen Kerntriebwerk 105 genutzt, um einen Fan des jeweiligen Triebwerks 103 anzutreiben.

Das Blockdiagramm der Figur 10 veranschaulicht den Aufbau des Kerntriebwerks 105 eines Triebwerks 103 näher. Gemäß der Figur 10 wird aus dem Wasserstoffspeichertank 104 über das Kraftstoffzuführsystem 201 dem jeweiligen Kerntriebwerk 105 Wasserstoff als Kraftstoff zur Verfügung gestellt. Das Kerntriebwerk 105 weist dabei entlang einer Hauptströmungsrichtung s, die mit einer Mittelachse des Triebwerks 103 zusammenfällt, axial aufeinanderfolgend einen Niederdruckverdichter 202, einen Hochdruckverdichter 204, einen Diffusor 205, ein Kraftstoffeinspritzsystem 206, eine Brennkammer 207, eine Hochdruckturbine 208, eine Niederdruckturbine 209 und eine Auslassdüse 210 auf. Der Niederdruckverdichter 202 und der Hochdruckverdichter 204 sind im Blockdiagramm der Figur 10 über einen Verbindungskanal 203 miteinander verbunden. Der Hochdruckverdichter 204 wird von der Hochdruckturbine 208 über eine erste Welle 211 angetrieben, während der Niederdruckverdichter 203 von der Niederdruckturbine 209 über eine zweite Welle 212 angetrieben wird. Anstelle der in der Figur 10 ersichtlichen zweiwelligen Ausführung für die Kopplung kann selbstverständlich aber auch eine dreiwellige Ausführung vorgesehen sein.

Im Betrieb des Triebwerks 103 treibt die Niederdruckturbine 209 einen Fan 213 des Triebwerks 103 über eine (Untersetzungs-) Getriebeeinheit 214 an. Die Getriebeeinheit 214 ist antriebsseitig mit der zweiten Welle 212 verbunden und ist abtriebsseitig über eine Fanwelle 215 mit dem Fan 213 gekoppelt. Beispielsweise weist die Getriebeeinheit 214 ein epizyklisches Untersetzungsgetriebe auf. Alternativ oder ergänzend kann ein Planetengetriebe Teil der Getriebeeinheit 214 sein, wobei aber selbstverständlich auch alternative Getriebeausführungen möglich sind. Grundsätzlich kann auch eine Getriebeeinheit 214 ausgespart werden, sodass die von der Niederdruckturbine angetriebene zweite Welle 212 unmittelbar mit dem Fan 213 gekoppelt ist.

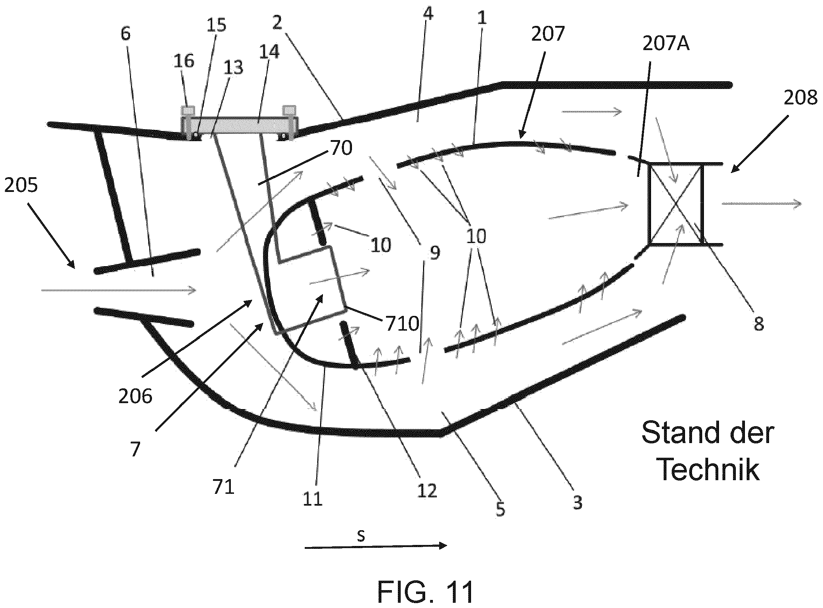

Die Figur 11 zeigt eine aus dem Stand der Technik bekannte Konfiguration einer Brennkammerbaugruppe mit dem Kraftstoffeinspritzsystem 206 und der Brennkammer 207, über die die Turbinenstufen der Hochdruckturbine 208 und der Niederdruckturbine 209 antreibbar sind. Die Brennkammer 207 definiert einen durch eine Brennkammerwand 1 berandenden Brennraum, der sich von einem Brennkammerkopf 11 zu einem Brennkammerauslass 207A erstreckt. Das bei der Verbrennung in dem Brennraum entstehende Abgas wird in Hauptströmungsrichtung s über ein Turbinenleitrad, insbesondere ein sogenanntes Turbinenvorleitrad 8 zu der Hochdruckturbine 208 geführt. Stromauf weist die Brennkammer 207 den Brennkammerkopf 11 und sich hieran stromab anschließend ein Hitzeschild 12 auf, in dem ein Düsenkopf einer Kraftstoffdüse 7 des Kraftstoffeinspritzsystems 206 aufgenommen ist. Das Hitzeschild 12 und der Brennkammerkopf 11 sind in der Praxis häufig als Schweißkonstruktion miteinander gefügt. Die Brennkammer 207 ist ferner zwischen einem (radial) äußeren Gehäuse 2 und einem (radial) inneren Gehäuse 3 der Brennkammerbaugruppe angeordnet.

Von dem Hochdruckverdichter 205 wird eine Luftströmung durch den Diffusor 205 und zuletzt durch Pre-Diffusor 6 in einen die Brennkammer 207 aufnehmenden Gehäuseraum geführt. Die aus dem Pre-Diffusor 6 kommende Luftströmung wird hier aufgeteilt. Ein Teil der Luftströmung wird über den Brennkammerkopf 11, in dem Hitzeschild 12 vorgesehene Kühlluftbohrungen 10 und den Düsenkopf der Kraftstoffdüse 7 in den Brennraum geleitet, um dort ein entzündliche Kraftstoff-Luft-Gemisch bereitzustellen. Ein weiterer Teil der Luft aus dem Pre-Diffusor 6 strömt in zwei (äußere und innere) Strömungsräume 4 und 5, die zwischen einer äußeren Mantelfläche der Brennkammerwand 1 und den Gehäusen 2 und 3 gebildet sind. Ein Teil der Luftströmung strömt dabei in den (äußeren) Strömungsraum 4 zwischen der Brennkammerwand 1 und dem äußeren Gehäuse 2, in dem die Brennkammer 207 vollständig aufgenommen ist. Ein weiterer Teil Luftströmung strömt in den (inneren) Strömungsraum 5 zwischen der Brennkammerwand 1 und dem radial innenliegenden Gehäuse 3. Die in die inneren und äußeren Strömungsräume 4 und 5 gelangende Luft dient der Kühlung der Brennkammerwand 1. So kann beispielsweise insbesondere (Kühl-) Luft durch Kühlluftbohrungen 10 zur effizienteren Kühlung der Brennkammerwand 1 und insbesondere hieran brennraumseitig vorgesehener Brennkammerschindeln von außen in den Brennraum geführt werden. Darüber hinaus weist die Brennkammerwand 1 zusätzliche Zumischluftlöcher 9 auf, um einen Teil der Luft aus den Strömungsräumen 4 und 5 in den Brennraum als Zumischluft zu leiten. Darüber hinaus kann Luft aus den Strömungsräumen 4 und 5 stromab der Brennkammer 207 auch zur Kühlung des Turbinenleitrads 8 genutzt werden.

Für die Bereitstellung des entzündlichen Kraftstoff-Luft-Gemisches wird der durch das Kraftstoffeinspritzsystem 206 bereitgestellte Kraftstoff in der Kraftstoffdüse 7 im Bereich des Hitzeschildes 12 mit Luft gemischt und an einer Stirnseite 710 eines Düsenkopfes 71 der Kraftstoffdüse 7 in die Brennkammer 207 eingedüst. Der Düsenkopf 71 der Kraftstoffdüse 7 ist hierfür dementsprechend am Brennkammerkopf 11 der Brennkammer 207 angeordnet. Hierbei ist der Düsenkopf 71 der Kraftstoffdüse 7 an einem radial nach innen ragendem Ende eines Düsenstamms 70 der Kraftstoffdüse 7 vorgesehen, der an dem äußeren Gehäuse 2 respektive einer Gehäusewandung dieses äußeren Gehäuses 2 fixiert ist. Hierbei ragt der Düsenstamm 70 durch ein Durchführloch 13 in der Gehäusewandung des (äußeren) Gehäuses 2 und ist über einen Befestigungsflansch 14 an der Gehäusewandung des Gehäuses 2 dichtend befestigt. In der Figur 11 ist der Befestigungsflansch 14 exemplarisch über Schrauben 16 mit dem Gehäuse 2 verbunden. Über eine Dichtung 15 an dem Befestigungsflansch 14 ist das Durchführloch 13 an der Gehäusewandung des Gehäuses 2 abgedichtet.

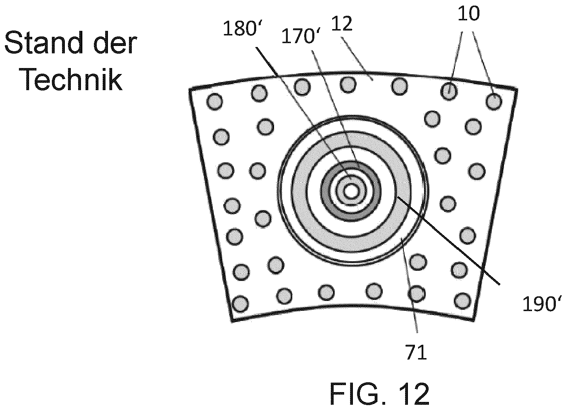

Die Figur 12 veranschaulicht mit Blick auf eine dem Brennraum der Brennkammer 207 zugewandte Innenseite des Hitzeschilds 12 eine aus dem Stand der Technik bekannte Ausgestaltung des Düsenkopfes 71 der Kraftstoffdüse 7. So ist hier eine kreisringförmige und damit nach Art eines Ringspalts ausgestaltete erste Austrittsöffnung 170' für Kraftstoff konzentrisch zu ebenfalls jeweils kreisringförmig ausgestalteten zweiten und dritten Ausströmöffnungen 180' und 190' für Luft vorgesehen. Die einzelne erste für den eindüsenden Kraftstoff vorgesehene Ausströmöffnung 170' ist dabei zentral an der Stirnseite des Düsenkopfes 71 vorgesehen. Radial weiter innen liegt eine zentrale zweite Ausströmöffnung 180' für eine erste Luftströmung. Radial weiter außen wiederum liegt die weitere, dritte Ausströmöffnung 190' für eine weitere Luftströmung.

Die aus dem Stand der Technik bekannte Gestaltung einer Brennkammerbaugruppe und insbesondere des Brennkammerkopfes 11 bietet insbesondere für ein wasserstoffbetriebenes Triebwerk 103 und damit bei Nutzung von Wasserstoff als Kraftstoff für das Triebwerk 103 nicht unerhebliches Verbesserungspotenzial. Hier setzt die vorgeschlagene Lösung an.

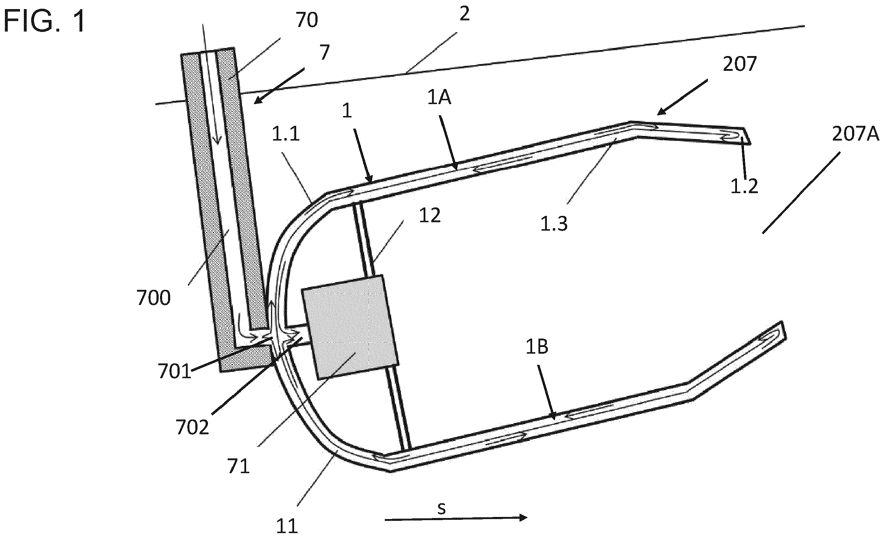

So ist bei den Ausführungsvarianten der Figuren 1, 2 und 3 vorgesehen, die Brennkammerwand 1 für die Vorwärmung insbesondere gasförmigen Kraftstoffs, wie zum Beispiel Wasserstoff, und für die Kühlung der Brennkammerwand 1 zu nutzen. So wird hier der Kraftstoff während des Führens innerhalb der Brennkammerwand durch die im Brennraum herrschenden, vergleichsweise hohen Temperaturen vorgewärmt, bevor ein Eindüsen des Kraftstoffs in den Brennraum erfolgt. Dies ist gerade bei Wasserstoff von erheblichem Vorteil, bei dem vermieden werden muss, dass der Wasserstoff bei zu niedrigen Temperaturen eingedüst wird, gerade angesichts der Temperaturen, unter denen der Wasserstoff in dem Wasserstoffspeichertank 104 vorgehalten wird.

Bei der Ausführungsvariante der Figur 1 umfasst ein an dem Gehäuse 2 befestigter Düsenstamm 70 Teile des Kraftstoffeinspritzsystems 206. Innerhalb des Düsenstamms 70 der entsprechenden Kraftstoffdüse 7 ist eine Kraftstoffzuleitung 700 vorgesehen, über die Kraftstoff, zum Beispiel Wasserstoff, in Richtung des Brennkammerkopfes 11 geleitet wird. Der Brennkammerkopf 11 ist dabei vorliegend doppelwandig ausgeführt und einstückig mit der Brennkammerwand 1 der Brennkammer 207 ausgebildet oder hiermit stoffschlüssig verbunden, z.B. verschweißt. Die Kraftstoffzuleitung 700 mündet in einen brennkammerkopfseitigen Verteiler 701, über den einströmender Kraftstoff in zwei Teilströme aufgeteilt wird. So gelangt ein erster Teilstrom in einen ersten Wärmetauscherkanal 1A in einem radial außen und damit näher zu dem Gehäuse 2 liegenden Wandabschnitt der Brennkammerwand 1. Ein weiterer Teilstrom an Kraftstoff gelangt in einen Wärmetauscherkanal 1B in einem radial weiter innen liegenden Wandabschnitt der Brennkammerwand 1. In jedem Wärmetauscherkanal 1A, 1B wird der Kraftstoff zunächst über einen ersten Kanalabschnitt 1.1 ausgehend von dem Brennkammerkopf 11 in Richtung des Brennkammerauslasses 207A und damit eines axialen Endes der Brennkammerwand 1 geleitet. Im Bereich des Brennkammerauslasses 207A ist innerhalb des jeweiligen Wandabschnittes der Brennkammerwand 1 ein Umlenkbereich 1.2 vorgesehen, in dem die Kraftstoffströmung aus dem ersten Kanalabschnitt 1.2 um ca. 180° umgelenkt und in einem zweiten Kanalabschnitt 1.3 des jeweiligen Wärmetauscherkanals 1A oder 1B geleitet wird. Kraftstoff strömt somit über jeden der Wärmetauscherkanäle 1A, 1B zunächst innerhalb der Brennwand 1 von dem Brennkammerkopf 11 stromab in Richtung des Brennkammerauslasses 207A und dann zurück zu dem Brennkammerkopf 11. Damit die gesamte axiale Länge der Brennkammerwand 1 ausnutzend wird der Kraftstoff hierbei durch den Brennraum erwärmt und gleichzeitig die Brennkammerwand 1 durch den Kraftstoff gekühlt.

Vorliegend wird der Kraftstoff hierbei über den ersten Kanalabschnitt 1.1 an eine äußeren Mantelfläche der Brennkammerwand 1 angrenzend in Richtung des Brennkammerauslasses 207A geführt. Die Rückführung des Kraftstoffes in Richtung des Brennkammerkopfes 11 erfolgt dann in dem durch eine Trennwand von dem ersten Kanalabschnitt 1.1. getrennten zweiten Kanalabschnitt 1.3 angrenzend an eine innere, dem Brennraum zugewandte Mantelfläche der Brennkammerwand 1.

Aus den zweiten Kanalabschnitten 1.3 der Wärmetauscherkanäle 1A, 1B gelangt der (vorgewärmte) Kraftstoff am Brennkammerkopf 11 in eine Kraftstoff(sammel)leitung 702. Über die Kraftstoffleitung 702 wird folglich der gesamte Kraftstoff gesammelt in Richtung des Düsenkopfes 71 geleitet. Der hier weiterhin an einer Durchgangsöffnung in dem Hitzeschild 12 aufgenommene Düsenkopf 71 düst dann den vorgewärmten Kraftstoff zusammen mit aus dem Pre-Diffusor 6 stammender Luft unter Bildung eines entzündlichen Kraftstoff-Luft-Gemischs in den Brennraum ein.

Insbesondere bei der Nutzung von Wasserstoff als Kraftstoff und den damit einhergehenden niedrigen Temperaturen des in der Brennkammerwand 1 geführten Kraftstoffs, kann bei der Ausführungsvariante der Figur 1 eine separate Kühlung der Brennkammerwand 1 über eine Kühlluftströmung, die radial außen und radial innen an der Brennkammer 207 vorbeigeführt wird, unterbleiben. Damit steht dann auch mehr Luft für die Verbrennung innerhalb des Brennraums zur Verfügung.

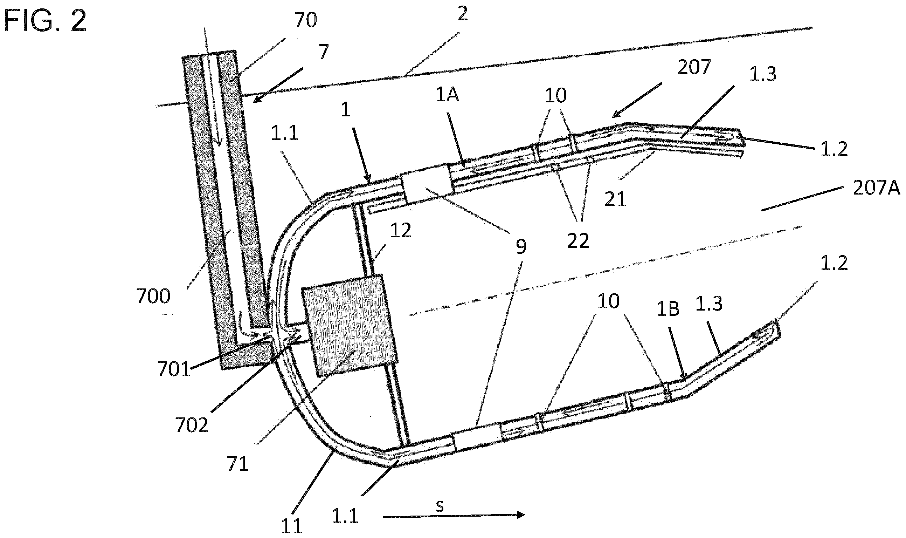

Gleichwohl kann selbstverständlich, wie anhand der Weiterbildung der Figur 2 veranschaulicht ist, auch weiterhin eine zusätzliche Kühlströmung an der Brennkammer 207 vorbei genutzt werden. So sieht die Ausführungsvariante der Figur 2 an der Brennkammerwand 1 weiterhin Zumischlöcher 9 und auch Kühlluftbohrungen 10 vor. Exemplarisch ist ferner an einem radial außen liegenden Wandabschnitt der Brennkammerwand 1 innenseitig eine Brennkammerschindel 21 mit Luftkühlung 22 ersichtlich.

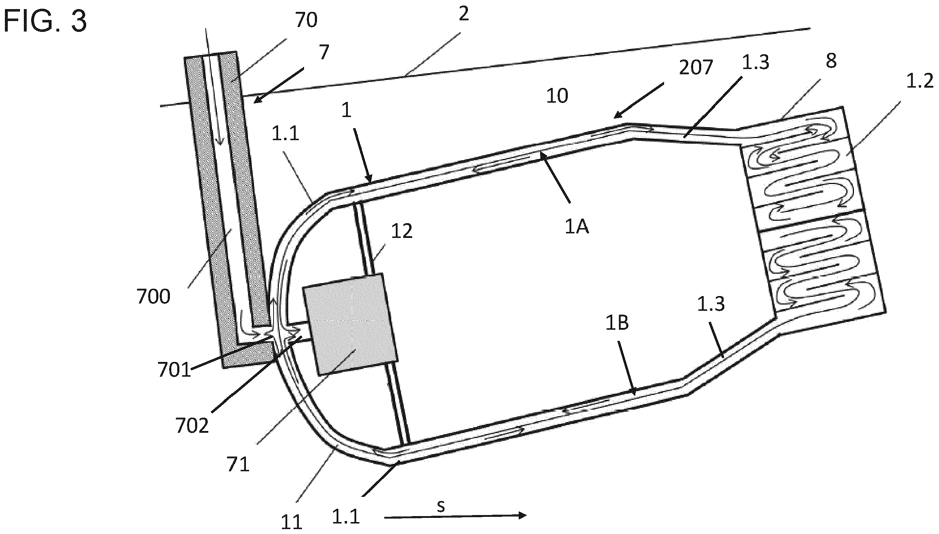

In einer möglichen Weiterbildung der Figur 3 ist ein gemeinsamer Umlenkbereich 1.2 an dem Brennkammerauslass 207A vorgesehen, um über den in der Brennkammerwand 1 geführten Kraftstoff zusätzlich das Turbinenvorleitrad 8 der der Brennkammer 207 nachgeordneten Hochdruckturbine 208 zu kühlen. Über den Umlenkbereich 1.2 ist hierbei jeweils ein erster Kanalabschnitt 1.1 eines ersten Wärmetauscherkanals 1A oder 1B mit einem zweiten Kanalabschnitt 1.3 des anderen Wärmetauscherkanals 1B oder 1A verbunden, sodass Kraftstoff zunächst aus der Kraftstoffzuleitung 700 und über den Verteiler 701 in dem jeweiligen radial innen oder radial außen liegenden Wandabschnitt der Brennkammerwand 1 in Richtung des Brennkammerauslasses 207A und damit in Richtung des Umlenkbereichs 102 geleitet wird. Anschließend, d. h. nach Durchströmung des Umlenkbereichs 1.2 wird der Kraftstoff dann in dem anderen, radial außen oder radial innen liegenden Wandabschnitt zurück in Richtung des Brennkammerkopfes 11 und des Düsenkopfs 71 geleitet. Innerhalb des gemeinsamen Umlenkbereichs 1.2 der eine Querverbindung zwischen den Wärmetauscherkanälen 1A und 1B darstellt, wird der Kraftstoff beispielsweise entlang eines mäanderförmigen Strömungspfades geführt, um eine möglichst große Kühlwirkung an dem Turbinenvorleitrad 8 zu erzielen.

Bei den Ausführungsvarianten der Figuren 1, 2 und 3 bilden der Brennkammerkopf 11 und die Brennkammerwand 1 jeweils einen Teil einer Kraftstoffführung, über die Kraftstoff aus der Kraftstoffzuleitung 700 zu dem Düsenkopf 71 geleitet wird. Der Brennkammerkopf 11 und die Brennkammerwand 1 können hierbei als einstückiges Bauteil ausgebildet und beispielsweise additiv gefertigt sein. Alternativ können der Brennkammerkopf 11 und die Brennkammerwand 1 als separate Bauteile gefertigt und beispielsweise durch Schweißen stoffschlüssig zusammengefügt sein.

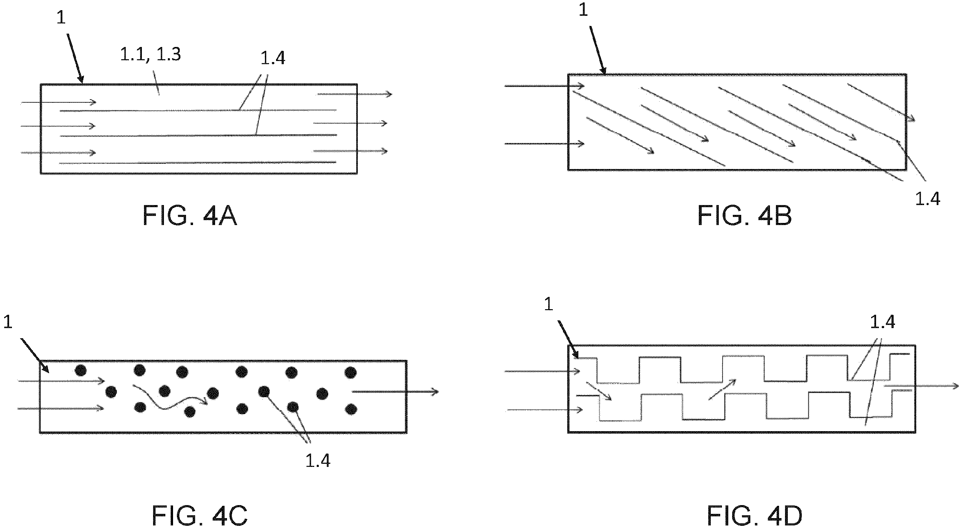

Die Figuren 4A bis 4D veranschaulichen mögliche weitere Ausgestaltungen der Wärmetauscherkanäle 1A, 1B und dabei insbesondere unterschiedliche Gestaltungen für eine interne Führung einer Kraftstoffströmung in der Brennkammerwand 1. Hierbei sind in den Ausschnitten der Figuren 4A, 4B, 4C und 4D unterschiedliche Leitelemente 1.4 und insbesondere Leitelemente 1.4 mit unterschiedlicher Orientierung gezeigt, um eine effiziente Führung des Kraftstoffs innerhalb der Brennkammerwand 1 und eine geeignete große Fläche für die gewünschte Wärmeübertragung zur Verfügung zu stellen. Bei der Ausführungsvariante der Figur 4A sind beispielsweise axial ausgerichtete Leitelemente 1.4 vorgesehen, während die Ausführungsvariante der Figur 4B schräg und damit geneigt zu der Hauptströmungsrichtung s angeordnete Leitelemente 1.4 vorsieht. Die Ausführungsvariante der Figur 4C zeigt des Leitelemente 1.4, um die eine Kraftstoffströmung mäanderförmig herum geführt wird. Eine mäanderförmige Führung des Kraftstoffs ist auch bei der gestuften Ausbildung von Leitelementen 1.4 entsprechend der Figur 4D vorgesehen.

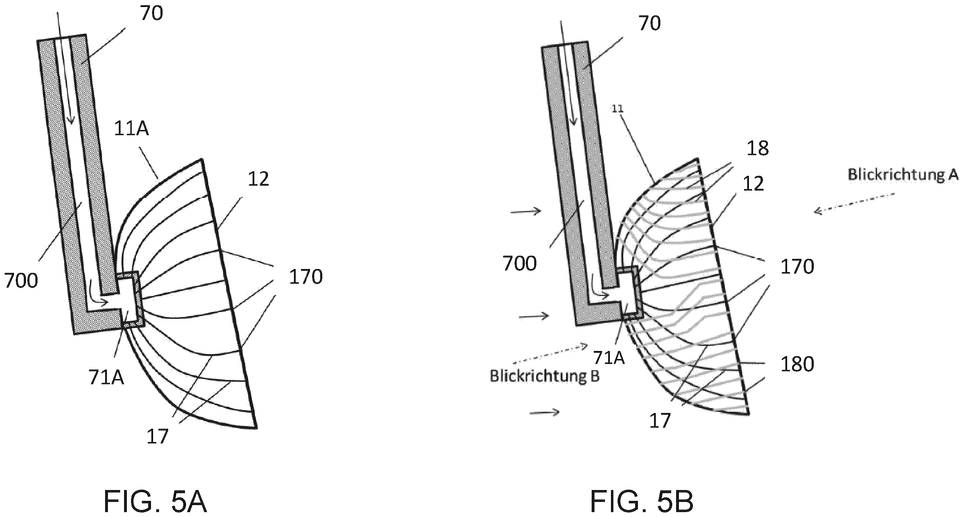

Während sich die Ausführungsvarianten der Figuren 1 bis 4D vor allem auf eine Kraftstoffführung innerhalb der Brennkammerwand 1 konzentrieren, um vorgewärmten Kraftstoff beispielsweise über einen Düsenkopf 71 in den Brennraum der Brennkammer 207 einzudüsen, ist bei einer Ausführungsvariante der Figuren 5A und 5B anstelle eines Düsenkopfes 71 brennkammerkopfseitig ein Kopfteil 11A vorgesehen. Dieses Kopfteil 11A integriert dabei eine Mehrzahl von Wärmetauscherkanälen 17, 18 für in den Brennraum einzudüsenden Kraftstoff und in den Brennraum einzudüsende Luft. Das Kopfteil 11A übernimmt somit die Aufgabe des Düsenkopf 71. Die Mehrzahl von Wärmetauscherkanälen 17, 18 mündet dabei jeweils in eine entsprechende Anzahl von ersten und zweiten Ausströmöffnungen an einer dem Brennraum zugewandten Stirnseite des Kopfteils 11A, über die Kraftstoff respektive Luft zur Bildung eines gewünschten Kraftstoff-Luft-Gemisches in den Brennraum ausgebracht wird.

Bei der Ausführungsvariante der Figuren 5A und 5B mündet die Kraftstoffzuleitung 700 unmittelbar in einen Sammler 71A, über den Kraftstoff auf eine Mehrzahl von für die Erwärmung des Kraftstoffs vorgesehenen Wärmetauscherkanälen 17 in dem Kopfteil 11A verteilt wird. Der Sammler 71A und das Kopfteil 11A können hierbei einstückig miteinander gefertigt sein. Für die Ausbildung der unterschiedlichen Wärmetauscherkanäle 17 und 18 kann das Kopfteil 11A gegebenenfalls auch zusammen mit dem Sammler 71A additiv gefertigt sein. Der Sammler 71A kann ferner mit dem Düsenstamm 70 respektive der Kraftstoffzuleitung 700 durch Schweißen oder Löten verbunden sein.

Die vorliegend in dem Kopfteil 11A sowohl radial als auch axial gleichmäßig verteilt angeordneten Wärmetauscherkanäle 17 und 18 sind für eine Wärmeübertragung zwischen den einzelnen Kraftstoffströmungen und Luftströmungen vorgesehen, die zu den jeweiligen ersten und zweiten Ausströmöffnungen 170 und 180 geleitet werden. So wird über das Kopfteil 11A vor dem Eindüsen in den Brennraum ein Kraftstoff über die einströmende Luft noch effektiv vorgewärmt. Dies ist insbesondere für einzudüsenden Wasserstoff als Kraftstoff von nicht unerheblichem Vorteil. Die Vielzahl der an dem Kopfteil 11A stirnseitig vorgesehenen Ausströmöffnungen 170 und 180 für Kraftstoff einerseits und Luft andererseits kann gerade bei gasförmig einzudüsendem Kraftstoff die Gemischbildung fördern.

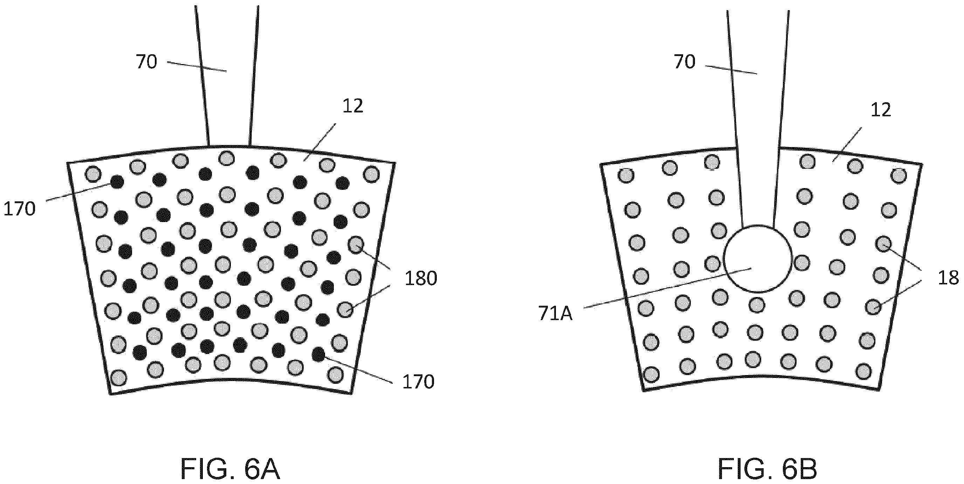

Die in der Figur 6A ersichtliche Stirnseite des Kopfteils 11A kann nach Art des Hitzeschilds 12 und damit insbesondere viereckig ausgebildet sein. An der dem Brennraum zugewandten Stirnseite des Kopfteils 11A sind die ersten und zweiten Ausströmöffnungen 170, 180 für Kraftstoff und Luft gleichmäßig verteilt und nehmen hierbei einen Großteil der Fläche der Stirnseite ein.

An einer gewölbten Außenseite des Kopfteils 11A bzw. des Brennkammerkopfes 11 können Einströmöffnung zu den Wärmetauscherkanälen 18 für Luft vorgesehen sein. Über diese Vielzahl von in der Figur 6B ersichtlichen Einströmöffnung gelangt aus dem Hochdruckverdichter 204 kommende Luft in das Kopfteil 11A.

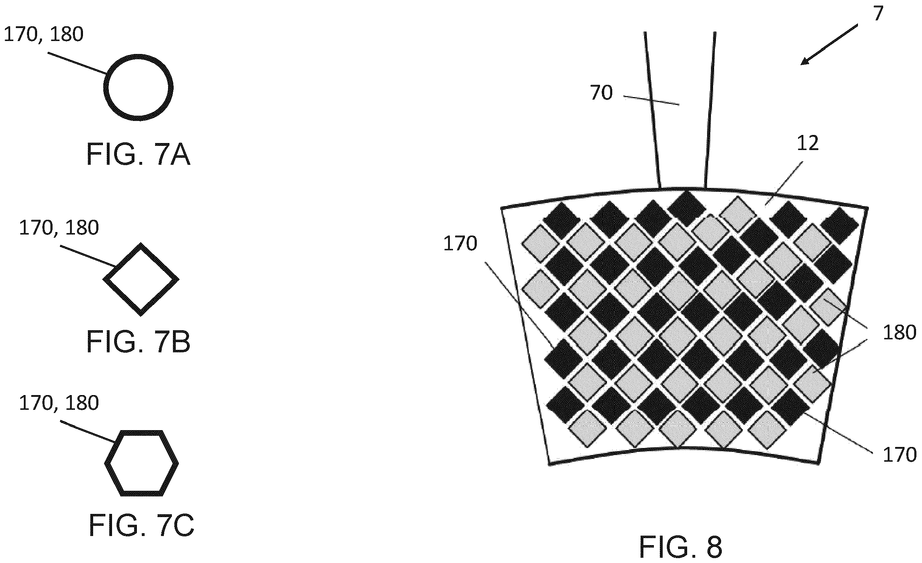

Wie anhand der Figuren 7A, 7B und 7C veranschaulicht ist, können die ersten und zweiten Ausströmöffnungen 170, 180 verschiedene Querschnittsformen aufweisen und beispielsweise rund, insbesondere kreisförmig (Figur 7A), rautenförmig (Figur 7B) oder hexagonalförmig (Figur 7C) sein. Analog können die Wärmetauscherkanäle 17, 18 für die einzelnen diskreten Kraftstoff- und Luftströmungen innerhalb des Kopfteils 11A unterschiedliche, den Ausströmöffnungen 170, 180 entsprechende Querschnittsformen aufweisen.

Um den Wärmeaustausch zwischen Luft und Kraftstoff über die in dem Kopfteil 11A integral ausgebildeten Wärmetauscherkanäle 17 und 18 weiter zu erhöhen, kann sich eine Anordnung der Wärmetauscherkanäle 17, 18 innerhalb des Kopfteils 11A nach einem Muster anbieten, bei dem zwischen benachbarten Wärmetauscherkanälen 17, 18 und damit auch zwischen benachbarten Ausströmöffnungen 170, 180 jeweils lediglich ein schmaler Steg vorhanden ist. Die Wärmetauscherkanäle 17, 18 und ihre Ausströmöffnungen 170, 180 sind dann beispielsweise in einer Vorderansicht auf die Stirnseite des Kopfteils 11A entsprechend der Figur 8 nach Art eines Wabenmusters angeordnet. Bei einer derartigen Anordnung lässt sich ohne Weiteres erreichen, dass mehr als 75%, insbesondere mehr als 85% der Fläche der Stirnseite von ersten und zweiten Ausströmöffnungen 170, 180 eingenommen wird und innerhalb des Kopfteils 11A ein maximierter Wärmeaustausch zwischen Kraftstoff und Luft stattfindet.

Die Ausgestaltung eines Brennkammerkopfes 11 mit einem Kopfteil 11A entsprechend den Ausführungsvarianten der Figuren 5A bis 8 kann ohne Weiteres mit einer kraftstoffgekühlten Brennkammerwand 1 entsprechend den Figuren 1 bis 4D kombiniert werden. Hierbei münden dann beispielsweise zweite Kanalabschnitte 1.3 der bennkammerwandseitigen Wärmetauscherkanäle 1A, 1B nicht in eine Kraftstoff(sammel)leitung 702, die den Kraftstoff zu einem Düsenkopf 71 führt. Hier wird vielmehr der Kraftstoff aus den zweiten Kanalabschnitten 1.3 zurück in Richtung des Brennkammerkopfes 11 in den Sammler 71A und von dort aus in die Mehrzahl der kopfteilseitigen Wärmetauscherkanäle 17 geleitet.

### Bezugszeichenliste

- 1: Brennkammerwand
- 1A, 1B: Wärmetauscherkanal
- 1.1, 1.3: Kanalabschnitt
- 1.2: Umlenkbereich
- 1.4: Leitelement
- 2: Äußeres Gehäuse
- 3: Inneres Gehäuse
- 4: Äußerer Strömungsraum
- 5: Innerer Strömungsraum
- 6: Pre-Diffusor
- 7: Kraftstoffdüse
- 70: Düsenstamm
- 700: Kraftstoffzuleitung
- 701: Verteiler
- 702: Kraftstoff(sammel)leitung
- 71: Düsenkopf
- 71A: Sammler
- 710: Stirnseite
- 8: Turbinenleitrad
- 9: Zumischluftloch
- 10: Kühlluftbohrung
- 11: Brennkammerkopf
- 11A: Kopfteil
- 12: Hitzeschild
- 13: Durchführloch
- 14: Befestigungsflansch
- 15: Dichtung
- 16: Schraube
- 17: Wärmetauscherkanal / Kraftstoffleitung
- 170, 170': Ausströmöffnung für Kraftstoff
- 18: Wärmetauscherkanal / Lufteitung
- 180, 180': Ausströmöffnung für Luft
- 190': Dritte Ausströmöffnung (für Luft)
- 20: Verteiler
- 21: Brennkammerschindel
- 22: Luftkühlung
- 101: Flugzeug
- 102: Rumpf
- 103: (Turbofan-)Triebwerk
- 104: Wasserstoffspeichertank
- 105: Kerntriebwerk
- 201: Kraftstoffzuführsystem
- 202: Niederdruckverdichter
- 203: Verbindungskanal
- 204: Hochdruckverdichter
- 205: Diffusor
- 206: Kraftstoffeinspritzsystem
- 207: Brennkammer
- 207A: Brennkammerauslass
- 208: Hochdruckturbine
- 209: Niederdruckturbine
- 210: Auslassdüse
- 211: Erste Welle
- 212: Zweite Welle
- 213: Fan
- 214: (Untersetzungs-) Getriebeeinheit
- 215: Fanwelle
- s: Hauptströmungsrichtung

## Patentansprüche

1. Brennkammerbaugruppe für ein Triebwerk (103) mit
- einer Brennkammer (207), die einen von einer Brennkammerwand (1) berandeten und sich entlang einer Hauptströmungsrichtung (s) von einem Brennkammerkopf (11) zu einem Brennkammerauslass (207A) erstreckenden Brennraum definiert, und
- einem Kraftstoffeinspritzsystem (206), das mindestens eine Kraftstoffzuleitung (700) für den in den Brennraum einzudüsenden Kraftstoff aufweist,
wobei an dem Brennkammerkopf (11) ein Kopfteil (11A) für die Bereitstellung eines Kraftstoff-Luft-Gemischs vorgesehen ist, das an einer dem Brennraum zugewandten Stirnseite eine Mehrzahl von ersten Ausströmöffnungen (170) für Kraftstoff und eine Mehrzahl von zweiten Ausströmöffnungen (180) für Luft aufweist,
**dadurch gekennzeichnet, dass**
das Kopfteil (11A) Wärmetauscherkanäle (17, 18) für eine Wärmeübertragung zwischen in dem Kopfteil (11A) zu den ersten Auströmöffnungen (170) strömendem Kraftstoff und in dem Kopfteil (11A) zu den zweiten Ausströmöffnungen (180) strömender Luft integriert.

2. Brennkammerbaugruppe nach Anspruch 1, **dadurch gekennzeichnet, dass** in dem Kopfteil (11A) eine Mehrzahl von Wärmetauscherkanälen (17) für Kraftstoff und eine Mehrzahl von Wärmetauscherkanälen (18) für Luft integriert sind.

3. Brennkammerbaugruppe nach Anspruch 2, **dadurch gekennzeichnet, dass** die Mehrzahl von Wärmetauscherkanälen (17) für Kraftstoff und die Mehrzahl von Wärmetauscherkanälen (18) für Luft in dem Kopfteil (11A) gleichmäßig verteilt sind.

4. Brennkammerbaugruppe nach einem der Ansprüche 1 bis 3, **dadurch gekennzeichnet, dass** die ersten und zweiten Ausströmöffnungen (170, 180) an der Stirnseite des Kopfteils (11A) gleichmäßig verteilt angeordnet sind.

5. Brennkammerbaugruppe nach einem der Ansprüche 1 bis 4, **dadurch gekennzeichnet, dass** zumindest ein Teil der ersten und zweiten Ausströmöffnungen (170, 180) an der Stirnseite des Kopfteils (11A) in einem Muster angeordnet ist, bei dem benachbarte Ausströmöffnungen (170, 180) in einer Vorderansicht auf die Stirnseite durch einen länglichen Steg voneinander separiert sind.

6. Brennkammerbaugruppe nach einem der Ansprüche 1 bis 5, **dadurch gekennzeichnet, dass** die ersten und/oder zweiten Ausströmöffnungen (170, 180) einen kreisförmigen oder mehreckigen, insbesondere quadratischen, rautenförmigen oder hexagonalförmigen Querschnitt aufweisen.

7. Brennkammerbaugruppe nach einem der Ansprüche 1 bis 6, **dadurch gekennzeichnet, dass** an einer von dem Brennraum abgewandten Außenseite des Kopfteils (11A) eine Mehrzahl von Einströmöffnungen für zu den zweiten Ausströmöffnungen (170) zu leitende Luft vorgesehen ist.

8. Brennkammerbaugruppe nach einem der Ansprüche 1 bis 7, **dadurch gekennzeichnet, dass** das Kopfteil (11A) mit den integrierten Wärmetauscherkanälen (17, 18) ein additiv gefertiges Bauteil ist.

9. Brennkammerbaugruppe nach einem der Ansprüche 1 bis 8, **dadurch gekennzeichnet, dass** die Kraftstoffzuleitung (700) mit einem Sammler (71A) verbunden ist, der wiederum mit einer Mehrzahl von für den Kraftstoff vorgesehenen Wärmetauscherkanälen (17) des Kopfteils (11A) verbunden ist.

10. Brennkammerbaugruppe nach Anspruch 9, **dadurch gekennzeichnet, dass** der Sammler (71A) und das Kopfteil (11A) einstückig ausgebildet sind.

11. Brennkammerbaugruppe nach einem der Ansprüche 1 bis 10, **dadurch gekennzeichnet, dass** über den Sammler (71A) Kraftstoff zu den Wärmetauscherkanälen (17) des Kopfteils (11A) geführt wird, das einen Düsenkopf (71) des Kraftstoffeinspritzsystems (206) bildet.

12. Brennkammerbaugruppe nach einem der vorhergehenden Ansprüche, **dadurch gekennzeichnet, dass** die Brennkammerwand (1) mindestens einen Wärmetauscherkanal (1A, 1B) integriert, über den Kraftstoff in einem mit der Kraftstoffleitung (700) verbundenen ersten Kanalabschnitt (1.1) des Wärmetauscherkanals (1A, 1B) von dem Brennkammerkopf (11) in Richtung des Brennkammerauslasses (207A) und nach dem Durchströmen eines Umlenkbereichs (1.2) in einem zweiten Kanalabschnitt (1.3) des Wärmetauscherkanals (1A, 1B) zurück in Richtung des Brennkammerkopfes (11) und den Kopfteil (11A) geleitet wird.

13. Brennkammerbaugruppe nach Anspruch 12, **dadurch gekennzeichnet, dass** über den Umlenkbereich (1.2) jeweils ein erster Kanalabschnitt (1.1) eines Wärmetauscherkanals (1A, 1B) mit einem zweiten Kanalabschnitt (1.3) eines jeweiligen anderen Wärmetauscherkanals (1B, 1A) verbunden ist, sodass Kraftstoff zunächst in einem jeweiligen radial innen oder radial außen liegenden Wandabschnitt der Brennkammerwand (1) in Richtung des Brennkammerauslasses (207A) geleitet wird und anschließend in einem jeweiligen anderen, radial außen oder radial innen liegenden Wandabschnitt zurück in Richtung des Brennkammerkopfes (11) geleitet wird.

14. Brennkammerbaugruppe nach einem der vorhergehenden Ansprüche, **dadurch gekennzeichnet, dass** die Brennkammerbaugruppe für das Eindüsen eines gasförmigen Kraftstoffs, insbesondere für das Eindüsen von Wasserstoff vorgesehen ist.

15. Triebwerk mit einer Brennkammerbaugruppe nach einem der Ansprüche 1 bis 14.

## Claims

1. Combustion chamber assembly for an engine (103) with
- a combustion chamber (207), which defines a combustion space edged by a combustion chamber wall (1) and extending along a main flow direction (s) from a combustion chamber head (11) to a combustion chamber outlet (207A), and
- a fuel injection system (206) that has at least one fuel supply line (700) for the fuel to be injected into the combustion space,
wherein a head part (11A) is provided on the combustion chamber head (11) for supplying a fuel/air mixture, the head part having, on an end face facing the combustion space, a plurality of first outflow openings (170) for fuel and a plurality of second outflow openings (180) for air,
**characterised in that**
the head part (11A) integrates heat exchanger ducts (17, 18) for transferring heat between fuel flowing to the first outflow openings (170) in the head part (11A) and air flowing to the second outflow openings (180) in the head part (11A).

2. Combustion chamber assembly according to claim 1, **characterised in that** a plurality of heat exchanger ducts (17) for fuel and a plurality of heat exchanger ducts (18) for air are integrated in the head part (11A).

3. Combustion chamber assembly according to claim 2, **characterised in that** the plurality of heat exchanger ducts (17) for fuel and the plurality of heat exchanger ducts (18) for air are uniformly distributed in the head part (11A).

4. Combustion chamber assembly according to one of claims 1 to 3, **characterised in that** the first and second outflow openings (170, 180) are arranged, uniformly distributed, on the end face of the head part (11A).

5. Combustion chamber assembly according to one of claims 1 to 4, **characterised in that** at least a part of the first and second outflow openings (170, 180) is arranged on the end face of the head part (11A) in a pattern in which adjacent outflow openings (170, 180) are separated from each other in a front view onto the end face by an elongated bar.

6. Combustion chamber assembly according to one of claims 1 to 5, **characterised in that** the first and/or second outflow openings (170, 180) have a circular or polygonal cross section, in particular square, rhomboid or hexagonal in shape.

7. Combustion chamber assembly according to one of claims 1 to 6, **characterised in that** on an outer side of the head part (11A) facing away from the combustion space, a plurality of inflow openings is provided for air to be conducted to the second outflow openings (170).

8. Combustion chamber assembly according to one of claims 1 to 7, **characterised in that** the head part (11A) with the integral heat exchanger ducts (17, 18) is a component made as an add-on.

9. Combustion chamber assembly according to one of claims 1 to 8, **characterised in that** the fuel supply line (700) is connected to a collector (71A), which in turn is connected to a plurality of heat exchanger ducts (17) of the head part (11A) which are provided for the fuel.

10. Combustion chamber assembly according to claim 9, **characterised in that** the collector (71A) and the head part (11A) are designed in one piece.

11. Combustion chamber assembly according to one of claims 1 to 10, **characterised in that** fuel is directed through the collector (71A) to the heat exchanger ducts (17) of the head part (11A), which forms a nozzle head (71) of the fuel injection system (206).

12. Combustion chamber assembly according to one of the preceding claims, **characterised in that** the combustion chamber wall (1) integrates at least one heat exchanger duct (1A, 1B), through which fuel is conducted in a first duct section (1.1) of the heat exchanger duct (1A, 1B) connected to the fuel line (700) from the combustion chamber head (11), in the direction of the combustion chamber outlet (207A) and after flowing through a deflection region (1.2) in a second duct section (1.3) of the heat exchanger duct (1A, 1B) back in the direction of the combustion chamber head (11) and the head part (11A).

13. Combustion chamber assembly according to claim 12, **characterised in that** a first duct section (1.1) of a heat exchanger duct (1A, 1B) is respectively connected via the deflection region (1.2) to a second duct section (1.3) of a respective other heat exchanger duct (1A, 1B), so that fuel is first conducted in a respective radially inner or radially outer wall section of the combustion chamber wall (1) in the direction of the combustion chamber outlet (207A) and then conducted in a respective other radially outer or radially inner wall section back in the direction of the combustion chamber head (11).

14. Combustion chamber assembly according to one of the preceding claims, **characterised in that** the combustion chamber assembly is provided for injecting a gaseous fuel, in particular for injecting hydrogen.

15. Engine with a combustion chamber assembly according to one of claims 1 to 14.

## Revendications

1. Ensemble chambre de combustion pour un réacteur (103) pourvu
- d'une chambre de combustion (207) définissant un espace de combustion bordé par une paroi de chambre de combustion (1) et s'étendant le long d'une direction d'écoulement principale (s) depuis une tête de chambre de combustion (11) jusqu'à une sortie de chambre de combustion (207A), et
- d'un système d'injection de carburant (206), qui présente au moins une conduite de carburant (700) pour le carburant à injecter dans la chambre de combustion,
sur la tête de la chambre de combustion (11), une partie de tête (11A) étant prévue pour la mise à disposition d'un mélange carburant-air, qui présente sur une face frontale tournée vers la chambre de combustion une pluralité de premiers orifices de sortie (170) pour le carburant et une pluralité de deuxièmes orifices de sortie (180) pour l'air,
**caractérisé en ce que**
la partie de tête (11A)
intègre des canaux d'échange thermique (17, 18) pour un transfert thermique entre le carburant s'écoulant dans la partie de tête (11A) vers les premiers orifices de sortie (170) et l'air s'écoulant dans la partie de tête (11A) vers les deuxièmes orifices de sortie (180).

2. Ensemble chambre de combustion selon la revendication 1, **caractérisé en ce qu'**une pluralité de canaux d'échange thermique (17) pour le carburant et une pluralité de canaux d'échange thermique (18) pour l'air sont intégrés dans la partie de tête (11A).

3. Ensemble chambre de combustion selon la revendication 2, **caractérisé en ce que** la pluralité de canaux d'échange thermique (17) pour le carburant et la pluralité de canaux d'échange thermique (18) pour l'air sont répartis uniformément dans la partie de tête (11A).

4. Ensemble chambre de combustion selon l'une des revendications 1 à 3, **caractérisé en ce que** les premiers et deuxièmes orifices de sortie (170, 180) sont répartis de manière uniforme sur la face frontale de la partie de tête (11A).

5. Ensemble chambre de combustion selon l'une des revendications 1 à 4, **caractérisé en ce qu'**au moins une partie des premiers et deuxièmes orifices de sortie (170, 180) est disposée sur la face frontale de la partie de tête (11A) selon un motif, dans lequel des orifices de sortie (170, 180) voisins sont séparés les uns des autres par une nervure allongée dans une vue de devant sur la face frontale.

6. Ensemble chambre de combustion selon l'une des revendications 1 à 5, **caractérisé en ce que** les premiers et/ou deuxièmes orifices de sortie (170, 180) présentent une section transversale circulaire ou polygonale, en particulier carrée, en forme de losange ou hexagonale.

7. Ensemble chambre de combustion selon l'une des revendications 1 à 6, **caractérisé en ce que,** sur un côté extérieur de la partie de tête (11A) opposé à la chambre de combustion, il est prévu une pluralité d'orifices d'entrée pour l'air à diriger vers les deuxièmes orifices de sortie (170).

8. Ensemble chambre de combustion selon l'une des revendications 1 à 7, **caractérisé en ce que** la partie de tête (11A) avec les canaux d'échange thermique (17, 18) intégrés est un composant fabriqué de manière additive.

9. Ensemble chambre de combustion selon l'une des revendications 1 à 8, **caractérisé en ce que** la conduite d'alimentation en carburant (700) est reliée à un collecteur (71A) qui est lui-même relié à une pluralité de canaux d'échange thermique (17) de la partie de tête (11A) destinés au carburant.

10. Ensemble chambre de combustion selon la revendication 9, **caractérisé en ce que** le collecteur (71A) et la partie de tête (11A) sont formés d'une seule pièce.

11. Ensemble chambre de combustion selon l'une des revendications 1 à 10, **caractérisé en ce que** le carburant est acheminé via le collecteur (71A) vers les canaux d'échange thermique (17) de la partie de tête (11A) qui forme une tête d'injecteur (71) du système d'injection de carburant (206).

12. Ensemble chambre de combustion selon l'une des revendications précédentes, **caractérisé en ce que** la paroi de chambre de combustion (1) intègre au moins un canal d'échange thermique (1A, 1B) par lequel le carburant est amené dans une première portion de canal (1.1) du canal d'échange thermique (1A, 1B) reliée à la conduite de carburant (700) depuis la tête de la chambre de combustion (11) en direction de la sortie de la chambre de combustion (207A) et, après avoir traversé une zone de déviation (1.2) dans une deuxième portion de canal (1.3) du canal d'échange thermique (1A, 1B), en retour en direction de la tête de la chambre de combustion (11) et de la partie de tête (11A).

13. Ensemble chambre de combustion selon la revendication 12, **caractérisé en ce qu'**une première portion de canal (1.1) d'un canal d'échange thermique (1A, 1B) est reliée à une deuxième portion de canal (1.3) d'un autre canal d'échange thermique (1B, 1A) respectif par l'intermédiaire de la zone de déviation (1.2), de sorte que le carburant est d'abord conduit dans une section de paroi respective située radialement à l'intérieur ou radialement à l'extérieur de la paroi (1) de la chambre de combustion en direction de la sortie (207A) de la chambre de combustion et est ensuite ramené dans une autre section de paroi respective située radialement à l'extérieur ou radialement à l'intérieur en direction de la tête (11) de la chambre de combustion.

14. Ensemble chambre de combustion selon l'une des revendications précédentes, **caractérisé en ce que** l'ensemble chambre de combustion est prévu pour l'injection d'un carburant gazeux, en particulier pour l'injection d'hydrogène.

15. Réacteur pourvu d'un ensemble chambre de combustion selon l'une des revendications 1 à 14.
